# FASCICULE DE BREVET EUROPEEN

(11) **EP 0 889 281 B1**
(45) Date de publication et mention de la délivrance du brevet: **19.05.2004**
(21) Numéro de dépôt: 98401614.7
(22) Date de dépôt: 29.06.1998
(51) Int. Cl.: F21V 14/04, B60Q 1/06

(54) **Projecteur de véhicule automobile capable d'émettre, avec une source lumineuse unique, deux faisceaux différents**
Scheinwerfer für Kraftfahrzeuge, der zwei verschiedene Lichtverteilungmuster mit einer einzigen Lichtquelle erzeugen kann
Motor vehicle headlamp emitting two different light beams with a single light source

(30) Priorité: 30.06.1997 FR 9708192; 11.09.1997 FR 9711326; 02.03.1998 FR 9802476
(43) Date de publication de la demande: 07.01.1999
(73) Titulaire: VALEO VISION, 93000 Bobigny (FR)
(72) Inventeur: de Lamberterie, Antoine, 75019 Paris (FR); Lelevé, Joel, 93800 Epinay-sur-Seine (FR); Prévost, André, 91540 Mennecy (FR)
(74) Mandataire: Le Forestier, Eric

(56) Documents cités:
- DE-A- 3 742 191
- FR-A- 2 609 146
- US-A- 4 827 388
- US-A- 5 142 455

## Description

La présente invention a trait d'une façon générale les projecteurs de véhicules automobiles, et concerne en particulier un projecteur capable, avec une lampe unique et un réflecteur unique, d'engendrer deux faisceaux lumineux différents.

On connaît déjà dans la technique un certain nombre de projecteurs de ce type.

Tout d'abord, le document DE-A-44 19 365 décrit un projecteur dont le miroir possède une partie mobile, la lampe étant fixe, et le déplacement de cette partie mobile permet de modifier la répartition photométrique du faisceau, et donc d'engendrer deux faisceaux différents.

Cette solution connue est toutefois désavantageuse en ce que les deux positions de la partie mobile par rapport à la partie fixe doivent être assurées avec une précision extrême pour obtenir des faisceaux de bonne qualité, ce qui s'avère difficile à obtenir dans des projecteurs de grande série dont on cherche à maintenir le coût de revient à un niveau raisonnable.

On connaît également par le document EP-A-0 705 730 un projecteur dans lequel le miroir est fixe, tandis que la lampe peut être déplacée ou commutée entre deux positions, ce qui permet de produire deux faisceaux différents.

Dans le même esprit, on connaît par FR-A-2 239 862 un projecteur dans lequel on réalise une translation combinée de la lampe, verticalement et horizontalement, par rapport à un réflecteur fixe, conjointement avec un basculement d'un occulteur associé à la lampe, pour engendrer sélectivement un faisceau de croisement ou un faisceau de route.

On a toutefois observé que la commutation mécanique d'une lampe entre deux positions posait des problèmes pratiques difficiles à résoudre.

Ainsi, dans le cas d'une lampe halogène à filament, les chocs subis par la lampe à chaque déplacement, et en particulier à chaque arrivée en fin de course, diminuent sensiblement sa durée de vie. Cette durée de vie est également diminuée par les vibrations auxquelles la lampe est exposée. En effet, la rapidité de déplacement requise notamment pour passer dans des temps courts entre la fonction croisement et la fonction route implique que la lampe soit montée sur un équipage mobile aussi léger que possible, avec en conséquence une quasi impossibilité de filtrer ces vibrations.

Pour ce qui concerne les lampes à décharge gazeuse, leur durée de vie est normalement moins affectée par les chocs et vibrations que dans le cas d'une lampe à filament. Toutefois, ces chocs et vibrations provoquent des tressautements de l'arc lumineux, ainsi que des changements de couleur de la lumière émise, dus à une évaporation excessive des sels qui, en l'absence de vibrations, sont normalement condensés. Il en résulte la présence nettement perceptible, dans le faisceau projeté sur la route, d'un phénomène de scintillement qui affecte la qualité globale du projecteur.

Enfin un inconvénient des projecteurs à lampe déplaçable réside en ce que la précision du positionnement de la lampe par rapport au réflecteur, dans une position ou dans l'autre, se dégrade dans le temps, de façon essentiellement proportionnelle au nombre de manoeuvres, par le fait des usures. De telles usures s'avèrent difficiles à compenser sur des pièces qui sont nécessairement de petites dimensions. Et le recours à un guidage et à un positionnement de précision accroît sensiblement le coût de revient du projecteur.

Le document US-5 142 455 décrit un projecteur selon le préambule de la revendication 1, comprenant une lampe fixe et un miroir mobile grâce à des languettes flexibles constituant un assemblage en parallélogramme du miroir par rapport au boîtier du projecteur.

La présente invention vise à pallier ces inconvénients de l'état de la technique.

Elle propose à cet effet un projecteur selon la revendication 1.

Des aspects préférés, mais non limitatifs, du projecteur selon l'invention sont énoncés dans les revendications dépendantes.

D'autres aspects, buts et avantages de la présente invention apparaîtront mieux à la lecture de la description détaillée suivante de plusieurs formes de réalisation, données à titre d'exemples et faites en référence aux dessins annexés, sur lesquels :
- la figure 1 est une vue schématique en coupe verticale axiale d'un projecteur selon une forme de réalisation qui ne fait pas partie de la présente invention.
- les figures 2a et 2b illustrent, chacune par un ensemble de courbes isocandela, la photométrie de deux faisceaux lumineux obtenus avec le projecteur de la figure 1 ;
- la figure 3 est une vue de face d'un miroir pouvant être utilisé dans un projecteur selon l'invention ;
- la figure 4 est une vue de côté schématique du réflecteur et de la platine dans une forme préférée de réalisation ;
- les figures 5, 6, 7 et 8 sont des vues détaillées respectivement arrière, de dessus, de gauche, et de droite, d'un projecteur selon la forme préférée de réalisation ;
- la figure 9 est une vue avant de la platine avec les cames ; et
- les figures 10 et 11 sont des vues en plan et d'extrémité de l'une des cames de la figure 9.

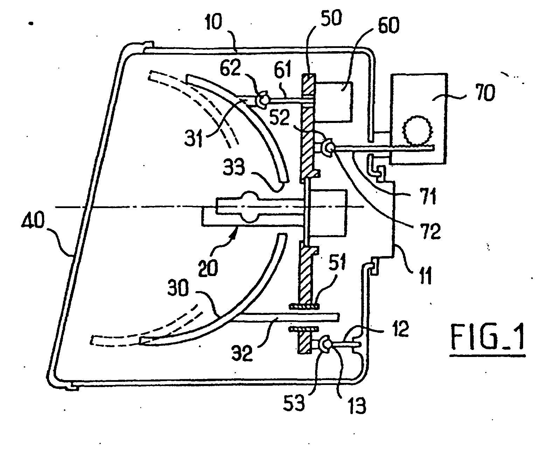

En référence aux dessins, et tout d'abord à la figure 1, on a représenté un projecteur de véhicule automobile ne faisant pas partie de la présente invention qui, de façon classique, possède un boîtier 10 fermé à l'avant par une glace 40 et abritant une lampe 20 et un réflecteur ou miroir 30 pourvu d'un trou 33 pour la lampe 20. Le boîtier 10 possède en outre, à l'arrière, une ouverture d'accès à la lampe 20, fermée par un capuchon 11.

Dans l'espace intérieur du boîtier 10 est prévue une platine 50 de support de la lampe et du miroir, sous forme d'une plaque généralement verticale et perpendiculaire à la direction générale x-x d'émission de la lumière.

Cette platine 50 s'appuie sur la région arrière du boîtier en trois points disposés aux trois sommets d'un triangle rectangle, dont deux sont visibles sur la figure 1.

Un premier de ces points est un point fixe défini par une tête sphérique 13 formée à l'extrémité libre d'une tige 12 fixée au boîtier dans sa région inférieure.

Un second de ces points et un point mobile en translation horizontale, défini par une tête sphérique 72 formée à l'extrémité d'une tige de commande 71 débouchant d'un module de correction en site 70, connu en soi, fixé sur la paroi arrière du boîtier.

Un troisième point, non représenté, se trouve à la hauteur du premier point, et peut être constitué par une tête sphérique réglable manuellement de façon à assurer un réglage en azimut de l'orientation des faisceaux.

La platine 50 est montée sur les têtes 13, 72 par des sièges, respectivement 53, 52, dans lesquels ces têtes sont encliquetées, de façon classique, et est montée de la même manière sur la troisième tête.

La lampe 20, qui est constituée en l'espèce par une lampe à décharge comportant un bulbe 21 et une embase 22, est montée sur la platine 50.

Le miroir 30 est également monté sur la platine 50, de façon mobile en translation. Plus précisément, un actuateur électrique 60 à deux positions stables est fixé sur le dos de la platine 50, dans sa partie supérieure, et possède une tige de sortie translatable 61 dirigée vers le dos du miroir 30 et dont l'extrémité libre porte une tête sphérique 62 engagée par encliquetage dans un siège 63 solidaire du miroir. Dans la région inférieure de la platine est formé un dispositif de guidage du miroir en translation, constitué par un guide traversant 51 formé dans la platine et à travers lequel peut coulisser horizontalement une tige lisse 31 solidaire du miroir.

Au moins un autre dispositif de guidage analogue est prévu en un autre endroit du miroir, de façon non illustrée.

De cette manière, l'actuateur 60 est capable de sélectivement amener le miroir 30 dans une position reculée, illustrée en traits pleins, ou dans une position avancée, illustrée en traits tiretés et dont le décalage horizontal par rapport à la position reculée a été exagéré par souci de clarté.

Dans la position reculée, la source lumineuse, en l'espèce l'arc de la lampe à décharge 20, est positionnée par rapport au miroir 30 de façon à engendrer un faisceau lumineux dont la répartition lumineuse et le contour correspondent à un faisceau de croisement européen normalisé.

La Demanderesse a déjà décrit dans de nombreuses publications de brevets antérieures des miroirs capables d'atteindre cet objectif sans avoir à associer à la source une coupelle d'occultation.

Dans cette position, le dispositif 70 de réglage en site se trouve dans une position telle que la coupure de ce faisceau se trouve à la hauteur imposée par la réglementation.

Le passage de ce faisceau de croisement en un faisceau différent, et typiquement un faisceau de route, est assuré:
- d'une part en effectuant une translation du miroir 30 par rapport à la platine 50, pour amener le miroir dans sa position avancée ;
- d'autre part en commandant le dispositif de réglage 70 de manière à effectuer un léger relèvement de la lumière émise, ceci étant obtenu en déplacement légèrement vers l'arrière le point d'appui 72 pour faire basculer la platine 50, et donc le miroir 30, dans le sens des aiguilles d'une montre sur la figure 1.

La translation indiquée ci-dessus permet d'engendrer une défocalisation de la source lumineuse par rapport au miroir, ce qui a pour effet principal d'atténuer très sensiblement la coupure nette obtenue dans la position reculée du miroir, et d'assurer une distribution homogène de la lumière dans une bande horizontale étendue mais relativement peu épaisse. Le basculement du miroir permet quant à lui de relever l'ensemble de la lumière ainsi répartie, pour que le faisceau soit émis à la hauteur convenable par rapport à la route.

Typiquement, un faisceau de route de photométrie satisfaisante est obtenu en déplaçant le miroir vers l'avant sur une distance de l'ordre de 2 mm.

Quant à l'importance du basculement vers le haut effectué par le dispositif de réglage en site 70, elle est de préférence de l'ordre de 1 à 2%.

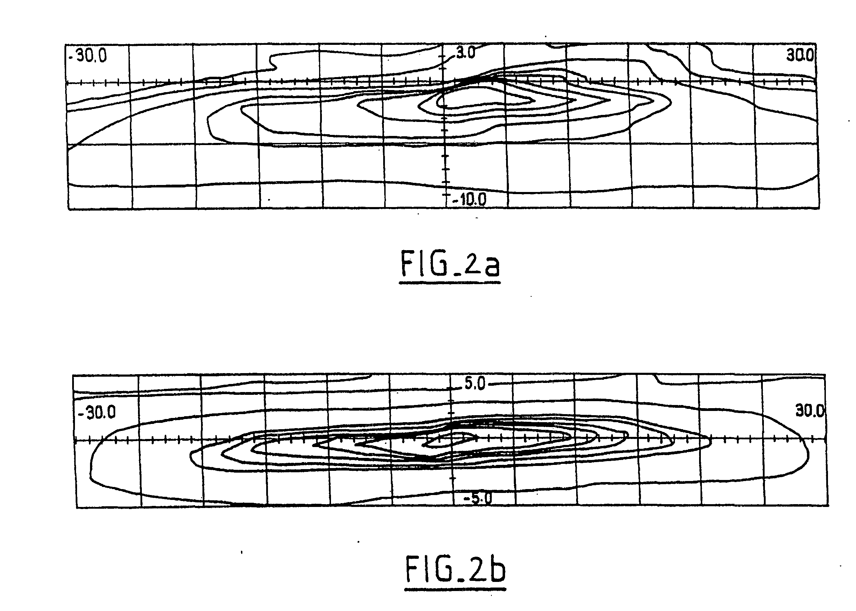

Les figures 2a et 2b représentent, par des ensembles de courbes isocandela sur un écran de projection gradué en pourcents, l'allure du faisceau de croisement et du faisceau de route, respectivement.

On observe que tant le faisceau de croisement, en fonction duquel le miroir 30 est spécifiquement conçu, que le faisceau de route, présentent des photométries tout à fait satisfaisantes.

On observera ici que, dans cette forme de réalisation, le dispositif de réglage en site 70 possède d'une part la fonction consistant à effectuer un basculement prédéterminé de la platine 50 pour le passage d'un faisceau à l'autre, et d'autre part la fonction de réglage du faisceau en site, de façon statique et/ou dynamique, en fonction des variations d'assiette du véhicule, avec une superposition appropriée des signaux de commande. Le dispositif 70 peut toutefois, en variante, ne remplir que la première de ces fonctions.

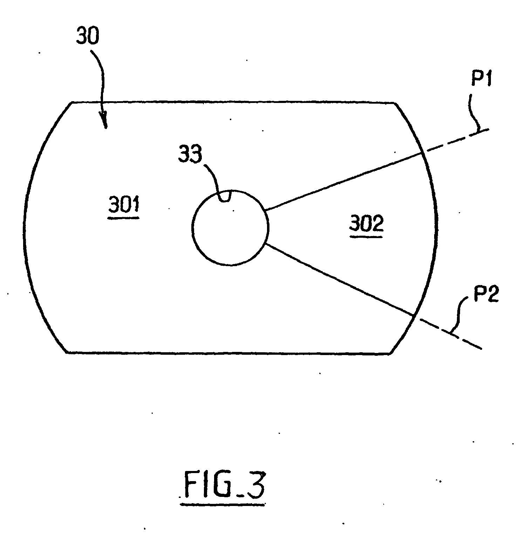

On va maintenant décrire en référence à la figure 3 une forme de réalisation préférée d'un miroir 30 utilisé dans un projecteur selon l'invention.

On a indiqué plus haut que le miroir était conçu pour que sa partie qui détermine la coupure du faisceau de croisement soit défocalisée par rapport à la source lumineuse lorsque le miroir est amené en position de route, de manière à faire disparaître cette coupure.

Dans le même temps, il est particulièrement avantageux qu'une zone particulière du miroir soit généralement défocalisée par rapport à la source dans la position croisement, et soit au contraire refocalisée dans la position route. Ceci permet, à l'aide de cette zone particulière, de donner au faisceau de route la tache de concentration centrale nécessaire pour un bon confort visuel.

Ainsi le miroir 30 illustré sur la figure 3 comprend une zone 301 et une zone 302, la zone 302 s'étendant, en vue de face, à droite de la lampe et étant délimitée en l'espèce par deux demi-plans P1 et P2 passant de préférence par l'axe du miroir.

Cette zone 302 s'étend par exemple sur 50 à 90°, tandis que la zone 301 s'étend par exemple sur 270 à 310°.

La zone 301 est apte, dans la position de croisement, à coopérer avec la source pour engendrer un faisceau délimité par une coupure nette, en l'espèce une coupure européenne normalisée. Dans cette même position, la zone 302 engendre un éclairement relativement concentré, décalé légèrement vers la droite par rapport à l'axe de la route.

Au contraire, dans la position de route, la zone 301 est défocalisée pour diffuser la lumière émise, et en particulier pour faire disparaître la coupure, tandis que la zone 302 se trouve refocalisée, c'est-à-dire que le ou les foyers de cette zone 302 sont rapprochés de la source, de manière à émettre une lumière plus concentrée, la nouvelle orientation du miroir dans cette position étant telle que cette lumière concentrée est émise dans l'axe de la route.

L'homme du métier saura réaliser ces surfaces sans difficulté à partir des enseignements des différents brevets sur le sujet publiés au nom de la Demanderesse.

Il est à noter que la position et la taille de la zone 302 peut largement varier en fonction du type de lampe utilisé. Ainsi, notamment avec une lampe à décharge équipée conventionnellement de bandes opaques destinées à faciliter la formation de la coupure normalisée, l'inclinaison du plan limite P2 n'est pas nécessairement corrélée à l'inclinaison d'une partie de coupure inclinée.

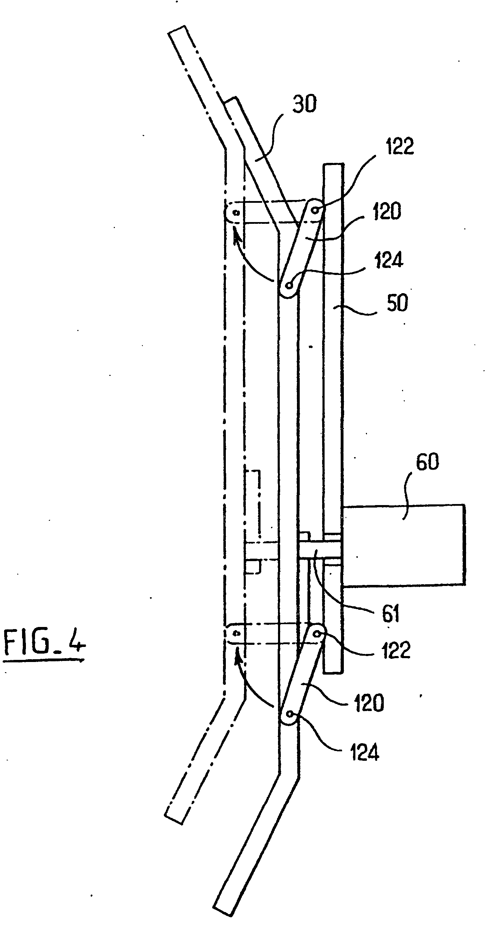

Dans la forme préférée de réalisation, le principe du montage du miroir 30 est illustré à la figure 4. Dans cette forme de réalisation, le miroir 30 est mobile alors que la lampe et la platine 50 sont fixes par rapport au boîtier du projecteur. On pourra de façon simple adapter le système selon cette forme de réalisation pour que le miroir 30 soit fixe par rapport au boîtier et que la lampe et la platine 50 soient mobiles par rapport à ces derniers. Il suffit à cette fin de rendre fixe le miroir par rapport au véhicule et au boîtier et de désolidariser la platine par rapport au véhicule et au boîtier.

Le projecteur comporte des biellettes 120, ici au nombre de quatre. Chaque biellette 120 est articulée par une extrémité autour d'un axe de rotation 122 à la platine 50, et par une autre extrémité autour d'un autre axe de rotation 124 au miroir 30.

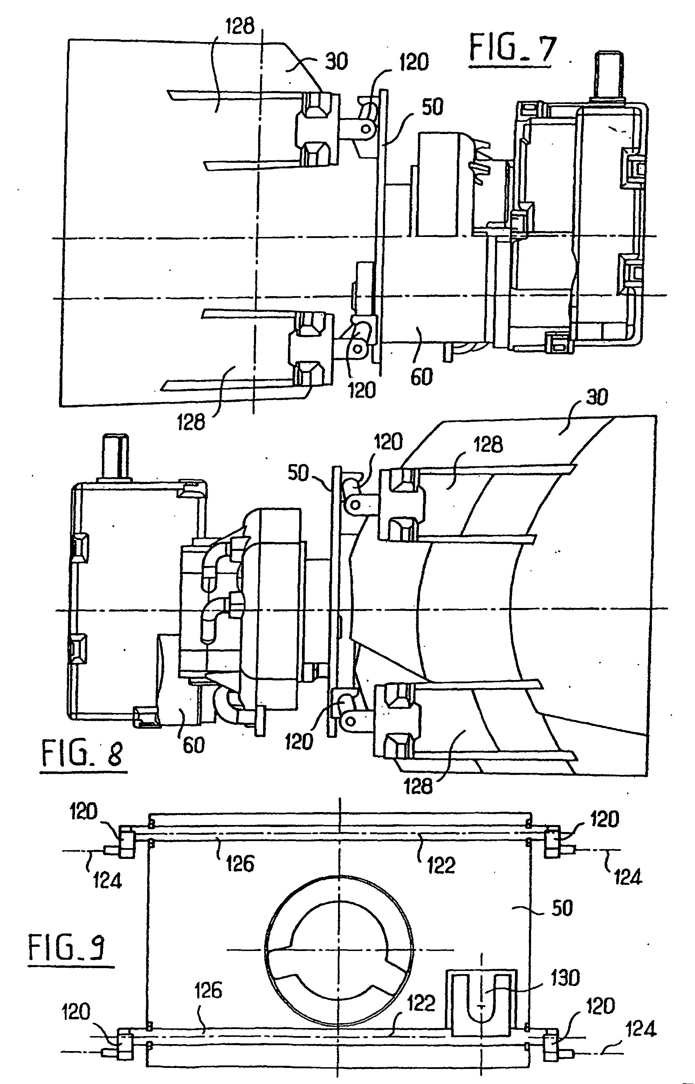

Les huit axes de rotation 122, 124 sont parallèles entre eux et parallèles à la platine 50. Les quatre biellettes 120 sont disposées aux quatre coins d'un rectangle, comme le montre notamment la figure 9. Les biellettes 120 sont agencées en deux paires de biellettes, les deux biellettes de chaque paire ayant leurs axes 122, 124 en coïncidence.

On réalise ainsi un double montage en parallélogramme déformable. Chaque biellette 120 est mobile en rotation par rapport à la platine 50 et par rapport au miroir 30. Le miroir 30 a une trajectoire circulaire et est mobile en translation par rapport à la platine 50. Ainsi, lors du mouvement du miroir 30, tous les points du miroir ont à un instant quelconque le même vecteur vitesse. Autrement dit, ils ont la même valeur de vitesse et se déplacent dans la même direction et le même sens. Le miroir 30 étant relié à la platine 50 en quatre points, on assure un positionnement précis du miroir au cours de ses déplacements par rapport à la platine. Le miroir 30 peut avoir une position basse reculée dans laquelle il est suspendu aux biellettes 120 fixées à la platine. Les biellettes sont alors inclinées vers le bas. Cette position est représentée en traits pleins sur la figure 4. Le miroir peut aussi avoir une position haute avancée représentée en traits mixtes sur la figure 4. Les biellettes sont alors à l'horizontale.

Le projecteur comporte un actuateur 60 à deux positions stables dont le corps est fixé en partie arrière de la platine 50 et la tige traverse un orifice de la platine et a son extrémité reliée à une face arrière du miroir 30. Pour permettre les déplacements verticaux du miroir au cours de son mouvement par rapport à l'actuateur, cette extrémité est reliée au miroir par un dispositif de liaison, connu en soi, autorisant les déplacements verticaux relatifs entre le miroir et la tige.

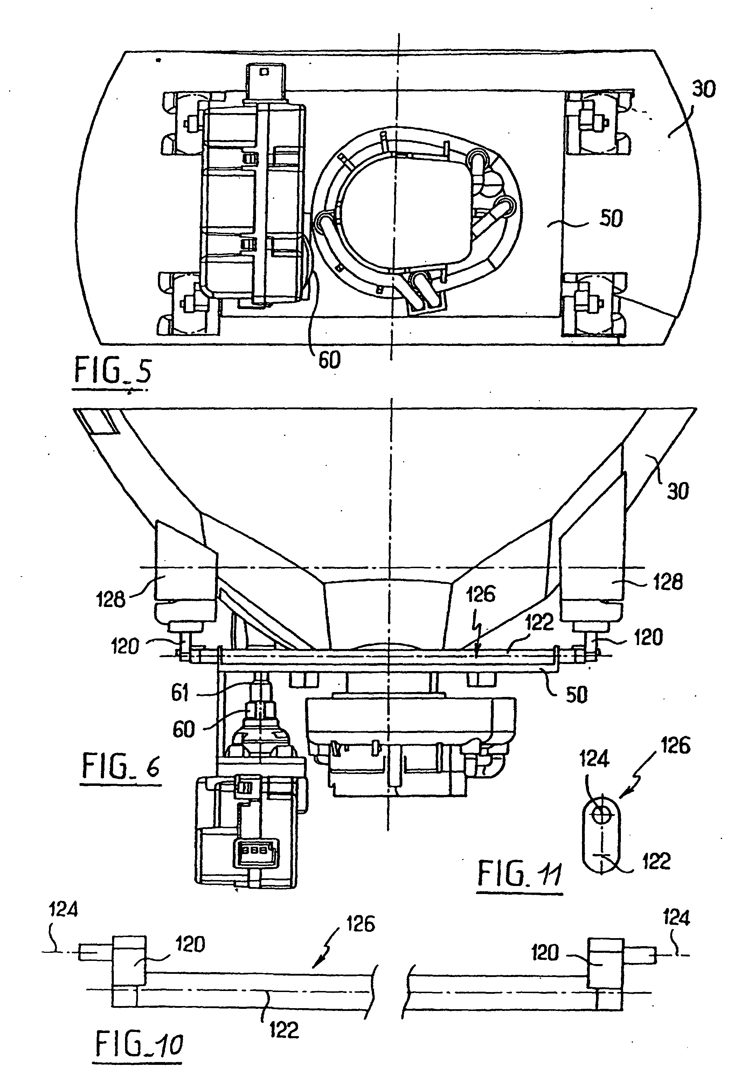

Un exemple de réalisation détaillé de cette forme de réalisation a été illustré aux figures 5 à 11. Dans cet exemple, chaque paire de biellettes 120 ayant leurs axes 122, 124 en coïncidence fait partie d'une même came respective 126 d'une seule pièce, ayant un corps rectiligne cylindrique et présentant les deux biellettes 120 à ses extrémités. Les deux biellettes sont ainsi fixes l'une par rapport à l'autre. Chaque came 126 est engagée par clipsage dans une échancrure de deux pattes arrière respectives de la platine 50. La came 126 est mobile en rotation autour de son axe longitudinal qui est l'axe 122. Les biellettes sont articulées sur quatre protubérances arrière 128 respectives du miroir. L'extrémité de la tige de l'actuateur 60 est engagée dans une glissière verticale 130 solidaire du miroir 30.

Cette forme de réalisation permet d'obtenir deux positions du miroir par rapport à la lampe, par exemple pour une fonction faisceau de croisement et une fonction faisceau de route. En variante, cette forme de réalisation peut inclure en outre un dispositif permettant le basculement de la platine 50 par rapport au boîtier du projecteur, comme décrit plus haut.

Bien entendu, l'invention n'est nullement limitée aux formes de réalisation décrites ci-dessus et représentées sur les dessins, mais l'homme du métier saura y apporter toute variante ou modification conforme aux revendications annexées.

En particulier, l'invention permet de réaliser non seulement des projecteurs code/route, mais également d'autres types de projecteurs, et notamment antibrouillard/complémentaire, etc.

## Revendications

1. Projecteur de véhicule automobile, comprenant une source lumineuse (20) et un miroir (30) déplaçables l'un par rapport à l'autre pour engendrer deux faisceaux lumineux de types différents, la source lumineuse étant montée fixe sur une partie (50) du projecteur par rapport à laquelle le miroir (30) peut être déplacé pour occuper sélectivement l'une parmi deux positions discrètes, le projecteur comportant au moins deux éléments (126) reliés chacun à la fois au miroir (30) et à la partie (50) du projecteur en définissant un montage en parallélogramme déformable reliant le miroir (30) et la partie (50) du projecteur, **caractérisé en ce que** les éléments sont des organes (126) formant biellettes (120), articulés chacun à la fois sur le miroir (30) et sur la partie (50) du projecteur.

2. Projecteur selon la revendication 1, **caractérisé en ce que** les biellettes (120) sont au nombre de quatre, chacun des deux organes (126) formant deux biellettes (120) fixes l'une par rapport à l'autre.

3. Projecteur selon la revendication 1 ou 2, **caractérisé en ce que** chaque organe (126) formant biellette est clipsé dans ladite partie (50) du projecteur.

4. Projecteur selon l'une des revendications 1 à 3, **caractérisé en ce que** le déplacement du miroir (30) par rapport à la source (20) consiste en une translation dans un plan non perpendiculaire à un axe d'éclairage du projecteur.

5. Projecteur selon l'une des revendications 1 à 4, **caractérisé en ce que** les organes (126) formant biellettes (120) ont des axes de rotation (122, 124) perpendiculaires à un axe d'éclairage du projecteur.

6. Projecteur selon l'une des revendications 1 à 5, **caractérisé en ce que** ladite partie du projecteur est constituée par une platine (50) reliée à un boîtier (10) du projecteur, et **en ce que** le miroir (30) est monté de façon déplaçable en translation sur la platine entre une position avancée et une position reculée à l'aide d'un premier moyen de déplacement (60).

7. Projecteur selon la revendication 6, **caractérisé en ce que** la platine (50) est montée sur le boîtier (10) du projecteur de façon déplaçable en basculement autour d'un axe horizontal à l'aide d'un second moyen de déplacement (70).

8. Projecteur selon la revendication 7, caractérisé en en ce que, pour engendrer un premier faisceau, le miroir (30) occupe une position reculée par rapport à la source (20) et la platine (50) n'est pas basculée, et, pour engendrer un second faisceau, le miroir occupe une position avancée par rapport à la source et la platine est basculée vers le haut.

9. Projecteur selon la revendication 8, **caractérisé en ce que** le premier faisceau est un faisceau de croisement et le second faisceau est un faisceau de route.

10. Projecteur selon l'une des revendications 7 à 9, **caractérisé en ce que** le second moyen de déplacement (70) constitue également un moyen de correction en site des faisceaux émis par le projecteur.

11. Projecteur selon l'une des revendications 1 à 10, **caractérisé en ce que** la source lumineuse (20) est montée fixe par rapport à un boîtier du projecteur.

12. Projecteur selon l'une des revendications 1 à 11, **caractérisé en ce que** le miroir (30) est monté fixe par rapport à un boîtier du projecteur.

13. Projecteur selon la revendication 9 et selon l'une des revendications 1 à 12, **caractérisé en ce que** le miroir comprend une première zone (301) et une seconde zone (302), **en ce que**, dans la première position du miroir, la première zone (301) est apte à engendrer une partie du faisceau de croisement délimitée par une coupure nette et la seconde zone (302) est apte à engendrer une partie du premier faisceau située au-dessous de cette coupure, et **en ce que**, dans la seconde position du miroir, la première zone (301) est apte à engendrer une partie diffuse du faisceau de route et la seconde zone (302) est apte à engendrer une partie de concentration, dans l'axe de la route, du faisceau de route.

14. Projecteur selon la revendication 13, **caractérisé en ce que** les première et seconde zones (301, 302) sont délimitées par deux demi-plans (P1, P2) passant au voisinage de l'axe du miroir, et **en ce que** la seconde zone possède une étendue angulaire limitée située latéralement par rapport à la source.

## Patentansprüche

1. Kraftfahrzeugscheinwerfer mit einer Lichtquelle (20) und einem Reflektor (30), die zum Erzeugen von zwei unterschiedlichen Lichtbündelarten in Bezug aufeinander verlagerbar sind, wobei die Lichtquelle an einem Teil (50) des Scheinwerfers starr montiert ist, in Bezug auf den der Reflektor (30) verlagerbar ist, um wahlweise eine von zwei diskreten Positionen einzunehmen, wobei der Scheinwerfer wenigstens zwei Elemente (126) umfasst, die jeweils sowohl mit dem Reflektor (30) als auch mit dem Teil (50) des Scheinwerfers verbunden sind und eine verformbare, parallelogrammartige Struktur bilden, durch die der Reflektor (30) und der Teil (50) des Scheinwerfers miteinander verbunden sind,
**dadurch gekennzeichnet, dass** die Elemente Organe (126) sind, die Schwingarme (120) bilden, die jeweils sowohl am Reflektor (30) als auch am Tail (50) des Scheinwerfers angelenkt sind.

2. Scheinwerfer nach Anspruch 1,
**dadurch gekennzeichnet, dass** es sich um vier Schwingarme (120) handelt, wobei jedes der beiden Organe (126) zwei Schwingarme (120) bildet, die in Bezug aufeinander befestigt sind.

3. Scheinwerfer nach Anspruch 1 oder 2,
**dadurch gekennzeichnet, dass** jedes einen Schwingarm bildende Organ (126) an dem Teil (50) des Scheinwerfers festgeklipst ist.

4. Scheinwerfer nach einem der Ansprüche 1 bis 3,
**dadurch gekennzeichnet, dass** das Verlagern des Reflektors (30) in Bezug auf die Lichtquelle (20) durch eine Translationsbewegung in einer nicht lotrecht zu einer Beleuchtungsachse des Scheinwerfers verlaufenden Ebene erfolgt.

5. Scheinwerfer nach einem der Ansprüche 1 bis 4,
**dadurch gekennzeichnet, dass** die die Schwingarme (120) bildenden Organe (126) Rotationsachsen (122, 124) haben, die lotrecht zu einer Beleuchtungsachse des Scheinwerfers verlaufen.

6. Scheinwerfer nach einem der Ansprüche 1 bis 5,
**dadurch gekennzeichnet, dass** der Teil des Schweinwerfers von einer Platte (50) gebildet ist, die mit einem Gehäuse (10) des Scheinwerfers verbunden ist, und dass der Reflektor (30) auf der Platte mit Hilfe eines ersten Verlagerungsmittels (60) zwischen einer vorgezogenen Position und einer zurückgezogenen Position translatorisch verlagerbar angebracht ist.

7. Scheinwerfer nach Anspruch 6,
**dadurch gekennzeichnet, dass** die Platte (50) auf dem Gehäuse (10) des Scheinwerfers mit Hilfe eines zweiten Verlagerungsmittels (70) um eine horizontale Achse verkippbar angebracht ist.

8. Scheinwerfer nach Anspruch 7,
**dadurch gekennzeichnet, dass** der Reflektor (30) zum Erzeugen eines ersten Lichtbündels eine erste, bezüglich der Lichtquelle (20) zurückgezogene Position einnimmt und die Platte (50) nicht gekippt ist, und der Reflektor zum Erzeugen eines zweiten Lichtbündels eine zweite, bezüglich der Lichtquelle vorgezogene Position einnimmt und die Platte nach oben gekippt ist.

9. Scheinwerfer nach Anspruch 8,
**dadurch gekennzeichnet, dass** das erste Lichtbündel ein Abblendlichtbündel und das zweite Lichtbündel ein Fernlichtbündel ist.

10. Scheinwerfer nach einem der Ansprüche 7 bis 9,
**dadurch gekennzeichnet, dass** das zweite Verlagerungsmittel (70) auch ein Mittel zur Korrektur des Höhenwinkels der vom Scheinwerfer emittierten Lichtbündel bildet.

11. Scheinwerfer nach einem der Ansprüche 1 bis 10,
**dadurch gekennzeichnet, dass** die Lichtquelle (20) in Bezug auf ein Gehäuse des Scheinwerfers feststehend angebracht ist.

12. Scheinwerfer nach einem der Ansprüche 1 bis 11,
**dadurch gekennzeichnet, dass** der Reflektor (30) in Bezug auf ein Gehäuse des Scheinwerfers feststehend angebracht ist.

13. Scheinwerfer nach Anspruch 9 und einem der Ansprüche 1 bis 12,
**dadurch gekennzeichnet, dass** der Reflektor einen ersten Bereich (301) und einen zweiten Bereich (302) aufweist, dass der erste Bereich (301) in der ersten Position des Reflektors einen durch eine scharfe Hell-Dunkel-Grenze begrenzten Teil des Abblendlichtbündels zu erzeugen vermag und der zweite Bereich (302) einen unter dieser Hell-Dunkel-Grenze liegenden Teil des ersten Lichtbündels zu erzeugen vermag, und dass der erste Bereich (301) in der zweiten Position des Reflektors einen diffusen Teil des Fernlichtbündels zu erzeugen vermag und der zweite Bereich (302) einen auf der Fahrbahnachse konzentrierten Teil des Fernlichtbündels zu erzeugen vermag.

14. Scheinwerfer nach Anspruch 13,
**dadurch gekennzeichnet, dass** der erste und der zweite Bereich (301, 302) durch zwei in der Nähe der Reflektorachse verlaufende Halbebenen (P1, P2) begrenzt sind, und dass der zweite Bereich eine bezüglich der Lichtquelle seitlich angeordnete begrenzte Winkelerstreckung besitzt.

## Claims

1. A motor vehicle headlight, comprising a light source (20) and a reflector (30), which are displaceable with respect to each other whereby to generate two light beams of different types, the light source being mounted fixedly on a part (50) of the headlight with respect to which the reflector (30) is displaceable so as to occupy selectively one of two discrete positions, the headlight having at least two elements (126) each of which is connected both to the reflector (30) and to the said part (50) of the headlight, so defining a deformable parallelogram mounting which connects the reflector (30) and the said part (50) of the headlight together, **characterised in that** the said elements are members (126) defining cranks (120), each of which is articulated both on the reflector (30) and on the said part (50) of the headlight.

2. A headlight according to Claim 1, **characterised in that** the cranks (120) are four in number, each of the two said members (126) defining two cranks (120) which are fixed with respect to each other.

3. A headlight according to Claim 1 or Claim 2, **characterised in that** each member (126) defining a crank is clipped in the said part (50) of the headlight.

4. A headlight according to one of Claims 1 to 3, **characterised in that** the displacement of the reflector (30) with respect to the light source (20) consists in straight line movement in a plane which is not at right angles to an axis of illumination of the headlight.

5. A headlight according to one of Claims 1 to 4, **characterised in that** the members (126) defining cranks (120) have axes of rotation (122, 124) which are at right angles to an axis of illumination of the headlight.

6. A headlight according to one of Claims 1 to 5, **characterised in that** the said part of the headlight consists of a platen (50) connected to a housing (10) of the headlight, and **in that** the reflector (30) is mounted so as to be displaceable in straight line motion on the platen between an advanced position and a retracted position with the aid of a first displacement means (60).

7. A headlight according to Claim 6, **characterised in that** the platen (50) is mounted on the housing (10) of the headlight so as to be displaceable in tilting movement about a horizontal axis with the aid of a second displacement means (70).

8. A headlight according to Claim 7, **characterised in that**, in order to generate a first beam, the reflector (30) occupies a retracted position with respect to the light source (20) and the platen (50) is not tilted, and, in order to generate a second beam, the reflector occupies an advanced position with respect to the light source and the platen is tilted upwards.

9. A headlight according to Claim 8, **characterised in that** the first beam is a passing beam and the second beam is a cruising beam.

10. A headlight according to one of Claims 7 to 9, **characterised in that** the second displacement means (70) also constitutes a means for horizontal correction of the beams emitted by the headlight.

11. A headlight according to one of Claims 1 to 10, **characterised in that** the light source (20) is mounted fixedly with respect to a housing of the headlight.

12. A headlight according to one of Claims 1 to 11, **characterised in that** the reflector (30) is mounted fixedly with respect to a housing of the headlight.

13. A headlight according to Claim 9 and according to one of Claims 1 to 12, **characterised in that** the reflector includes a first zone (301) and a second zone (302), **in that**, in the first position of the reflector, the first zone (301) is adapted to generate a part of the passing beam delimited by a sharp cut-off line, and the second zone (302) is adapted to generate a part of the first beam situated below the said cut-off line, and **in that**, in the second position of the reflector, the first zone (301) is adapted to generate a diffuse part of the cruising beam, while the second zone (302) is adapted to generate a part of the cruising beam which is concentrated in the axis of the road.

14. A headlight according to Claim 13, **characterised in that** the first and second zones (301, 302) are delimited by two half planes (P1, P2) passing close to the axis of the reflector, and **in that** the second zone has a limited angular extent situated laterally with respect to the light source.
